# EUROPEAN PATENT APPLICATION

(11) **EP 4 354 407 A1**
(43) Date of publication of application: **17.04.2024**
(21) Application number: 22820196.8
(22) Date of filing: 06.06.2022
(51) Int. Cl.: G08B 21/24, H04M 11/00, G08B 25/10, H04W 4/02, H04W 84/10, H04W 52/28

(54) **POSITION SEARCH SYSTEM AND POSITION SEARCH METHOD**

(30) Priority: 11.06.2021 JP 2021098147
(71) Applicant: NTT Communications Corporation, Tokyo 100-8019 (JP)
(72) Inventor: AOKI, Fumio, Tokyo 100-8019 (JP)
(74) Representative: Hoffmann Eitle
(86) International application number: PCT/JP2022/022848
(87) International publication number: WO 2022/260017

(57) **Abstract**

A position search system (1) includes a tag (10), a plurality of communication terminals (20) each of which receives the signal that is sent by the tag, and a server (30) that collects information from the communication terminals each of which has received the signal sent by the tag, wherein the tag (10) includes a determination unit configured to determine whether or not a movement has been made by the tag (10), and a setting unit configured to set, as the signal to be sent by the tag (10), a first signal when the presence of the communication terminal (20A) that has been paired with the tag (10) is being sensed, or after a pair with the communication terminal (20A) has been canceled or after the presence of the communication terminal (20A) is no longer sensed, and set, as the signal to be sent by the tag (10), a second signal, in which at least one of a transmission output and a transmission frequency has been increased as compared to the first signal, when the movement of the tag (10) has been determined in a state in which the pair with the communication terminal (20A) is canceled, or in a state in which the presence of the communication terminal (20A) is not sensed.

## Description

### [Technical Field]

The present invention relates to a position search system and a position search method.

### [Background Art]

In recent years, as a way to estimate positions of dementia elderly persons, children, pets, or valuable items, a system for estimating a position by allowing a tag that outputs a signal at regular intervals by using the standard for Bluetooth (registered trademark) or the like to be carried by an elderly person or a child, and notifying a server of positional information on a reception site of the signal received by a communication terminal, such as a smartphone, that is located near the reception site of the signal has been developed.

Furthermore, after a communication terminal carried by the owner and a tag have been paired, in the case where the communication terminal loses the ability to communicate with the tag or loses the ability to sense the presence of the communication terminal as a result of an increase of the distance between the communication terminal and the tag, there is a mechanism that prevents misplacement by outputting an alarm by the communication terminal or the tag.

With these methods, as a communication function that is needed on the tag side, Bluetooth (and Bluetooth Low Energy that is a type of Bluetooth) having an electrical power saving function is only needed as compared to a mobile communication network, and thus, there is no need to mount a large capacity battery. As a result, a small tag can be used for a long time, which makes it possible to easily allow a child to carry the tag or easily attach the tag to a valuable item. In addition, charging of the tag is not needed frequently.

### [Citation List]

### [Patent Citation]

Patent Literature 1: Japanese Laid-open Patent Publication No. 2011-250171

### [Summary of Invention]

### [Technical Problem]

In this way, regarding positional information management of the tags using Bluetooth, it is possible to implement both of a reduction in size of the communication terminal and a use of the communication terminal for a long time, and, it is thus very convenient, but there is a problem.

As the largest problem, in a case of a loss of the tag, the positional information is not able to be detected unless a communication terminal that is being carried by another person and that transmits the positional information on the tag is present nearby. A commonly used tag is constituted such that an arrival distance of the signal to be transmitted is about 10 m, and in the case where the communication terminal carried by the other person is present within a reach range in which the signal can be reached at a timing at which the tag has transmitted the signal, the positional information is able to be detected, but, in the case where the communication terminal carried by the other person is not present within the reach range, it is not possible to notify the server of the positional information. In the case where a communication terminal carried by another person frequently pass nearby in an urban area or the like, it is possible to notify the server of the positional information, but, in a suburban area or the like that is a place with few people, there may be a case in which the number of terminals capable of receiving a signal is small, and in this case, the position of the tag is less likely to be detected.

Accordingly, it is conceivable to use a method of increasing a probability of capable of receiving a signal by increasing a transmission frequency of the signal transmitted from the tag when the mobile terminal carried by the other person and the communication terminal carried by the owner pass each other, or a method of increasing a probability of capable of receiving a signal by increasing the transmission output of the signal transmitted from the tag and broadening a signal range when a mobile terminal carried by another person comes nearby.

However, even in either method, an amount of consumption of a battery of the tag is increased, and there is a need to increase the size of the tag itself, or there is a need to frequently charge the tag. Furthermore, in the case where a transmission frequency of the signal or a transmission output of the signal is increased, there may be a case in which it is not possible to receive a transmitted signal as a result of the signals being overlapped in a case where a lot of tags are present in, in particular, a narrow area.

Accordingly, the present invention has been conceived in light of the circumstances described above and an object thereof is to provide a position search system and a position search method capable of efficiently performing a position search for a tag while reducing an amount of consumption of a battery of a tag.

### [Solution to Problem]

In order to solve the above-described problems and achieve the object, a position search system according to the present invention is a position search system including: a tag that sends a signal that includes identification information; a plurality of communication terminals each of which receives the signal that is sent by the tag; and a server that collects information from the communication terminals each of which has received the signal sent by the tag, wherein the tag includes a determination unit configured to determine whether or not a movement has been made by the tag, a setting unit configured to set, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, and set, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed, and a sending unit configured to send the signal that has been set by the setting unit, the communication terminal includes a receiving unit configured to receive the signal that has been sent from the tag, and a notifying unit configured to notify the server of identification information on the tag included in the signal received from the tag, and positional information on the own communication terminal at the time of reception of the signal, and the server includes a collecting unit configured to collect, from the plurality of communication terminals, identification information on the tag and the positional information on the tag, a specifying unit configured to specify a position of the tag by using the positional information collected by the collecting unit, and an output unit configured to output information related to the position of the tag that has been specified by the specifying unit.

A position search system according to the present invention is a position search system including: a tag that sends a signal that includes identification information; a plurality of communication terminals each of which receives the signal that is sent by the tag; and a server that collects information from the communication terminals each of which has received the signal sent by the tag, wherein the tag includes a determination unit configured to determine whether or not a movement has been made by the tag, a setting unit configured to set, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, and set, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed and when presence of a second communication terminal with which the tag is able to communicate is not sensed, and a sending unit configured to send the signal that has been set by the setting unit, the communication terminal includes a receiving unit configured to receive the signal that has been sent from the tag, and a notifying unit configured to notify the server of identification information on the tag included in the signal received from the tag, and positional information on the own communication terminal at the time of reception of the signal, and the server includes a collecting unit configured to collect, from the plurality of communication terminals, identification information on the tag and the positional information on the tag, a specifying unit configured to specify a position of the tag by using the positional information collected by the collecting unit, and an output unit configured to output information related to the position of the tag that has been specified by the specifying unit.

A position search system according to the present invention is a position search system including: a tag that sends a signal that includes identification information; a plurality of communication terminals each of which receives the signal that is sent by the tag; and a server that collects information from the communication terminals each of which has received the signal sent by the tag, wherein the tag includes a determination unit configured to determine whether or not a movement has been made by the tag, a setting unit configured to set, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, set, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed, or, when the movement of the tag has been determined and also when presence of a second communication terminal with which the tag is able to communicate is not sensed for a certain period of time or more, and a sending unit configured to send the signal that has been set by the setting unit, the communication terminal includes a receiving unit configured to receive the signal that has been sent from the tag, and a notifying unit configured to notify the server of identification information on the tag included in the signal received from the tag, and positional information on the own communication terminal at the time of reception of the signal, and the server includes a collecting unit configured to collect, from the plurality of communication terminals, identification information on the tag and the positional information on the tag, a specifying unit configured to specify a position of the tag by using the positional information collected by the collecting unit, and an output unit configured to output information related to the position of the tag that has been specified by the specifying unit.

### [Advantageous Effects of Invention]

According to the present invention, it is possible to efficiently perform a position search for a tag while reducing an amount of consumption of a battery of a tag.

### [Brief Description of Drawings]

FIG. 1 is a schematic diagram illustrating the overall configuration of a position search system according to a first embodiment.
FIG. 2 is a block diagram illustrating an example of a configuration of a tag according to the first embodiment.
FIG. 3 is a block diagram illustrating an example of a configuration of a communication terminal according to the first embodiment.
FIG. 4 is a block diagram illustrating an example of a configuration of a server according to the first embodiment.
FIG. 5 is a diagram illustrating one example of a table stored by a positional information storage unit.
FIG. 6 is a diagram illustrating one example of a screen displayed in the communication terminal.
FIG. 7 is a sequence diagram illustrating a processing procedure of a position search process according to the first embodiment.
FIG. 8 is a sequence diagram illustrating a processing procedure of a position search process according to a first modification of the first embodiment.
FIG. 9 is a sequence diagram illustrating a processing procedure of a position search process according to a second modification of the first embodiment.
FIG. 10 is a sequence diagram illustrating another processing procedure of the position search process according to the second modification of the first embodiment.
FIG. 11 is a sequence diagram illustrating another processing procedure of a position search process according to a third modification of the first embodiment.
FIG. 12 is a schematic diagram illustrating the overall configuration of a position search system according to a second embodiment.
FIG. 13 is a block diagram illustrating an example of a configuration of a tag according to the second embodiment.
FIG. 14 is a sequence diagram illustrating a processing procedure of a position search process according to the first embodiment.
FIG. 15 is a sequence diagram illustrating a processing procedure of a position search process according to a first modification of a second embodiment.
FIG. 16 is a sequence diagram illustrating another processing procedure of the position search process according to the first modification of the second embodiment.
FIG. 17 is a block diagram illustrating an example of a configuration of a tag according to a third embodiment.
FIG. 18 is a sequence diagram illustrating a processing procedure of a position search process according to the third embodiment.
FIG. 19 is a diagram illustrating a computer that executes a position search program.

### [Embodiments for Carrying Out the Invention]

Preferred embodiments of a position search system and a position search method disclosed in the present application will be explained in detail below with reference to the accompanying drawings. In addition, the position search system and the position search method according to the present application are not limited by the embodiments.

### [First Embodiment]

First, a first embodiment will be described. In the first embodiment, in a state in which a tag is being paired with a communication terminal that is held by an owner of the tag, after the pair with the communication terminal has been canceled, or, after the presence of the communication terminal is no longer sensed, in the case where a movement of the tag itself has been determined, a tag sends a signal in which at least one of a transmission output and a transmission frequency has been increased. In this way, by limiting a signal sending operation, such as an operation of increasing electrical power consumed by the tag, to the case in which the communication terminal carried by the owner of the tag is not present nearby, and, also, to the case in which the tag itself has been moved, the electrical power consumption of the battery of the tag is reduced in the case where a possibility of a theft or the like is low. It is assumed that, "after the pair with the communication terminal has been canceled" includes "a state in which the pair with the communication terminal is being canceled". Furthermore, it is assumed that, "after the presence of the communication terminal is no longer sensed" includes "a state in which the presence of the communication terminal is not sensed".

In the following embodiment, a configuration of a position search system, a configuration of the tag, a configuration of the communication terminal, a configuration of a server, and the flow of the processes performed in the position search system according to the first embodiment will be described in this order, and lastly, the effects of the first embodiment will be described.

### [Configuration of position search system]

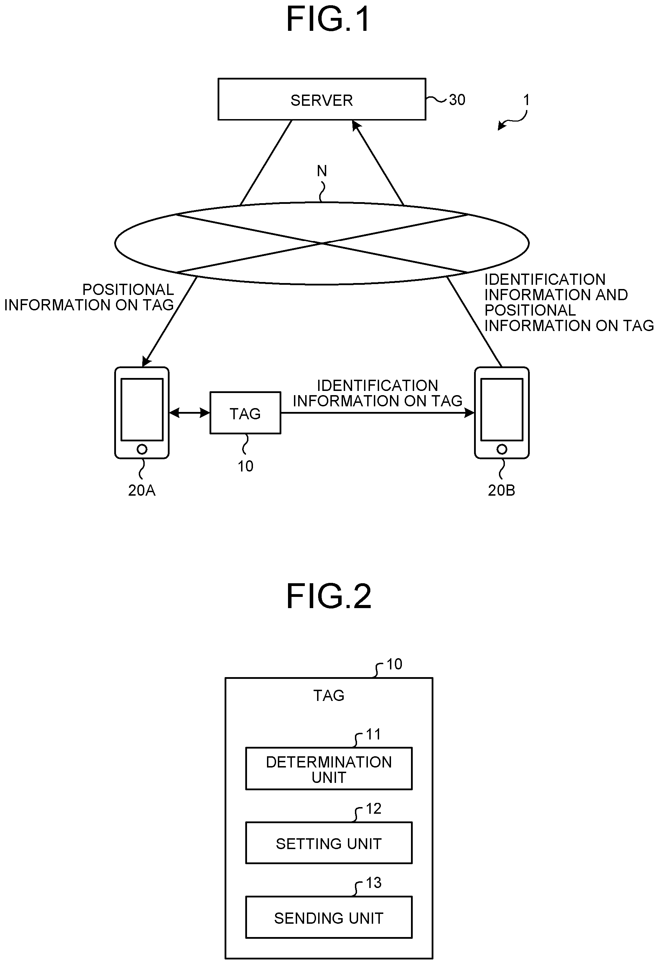

FIG. 1 is a schematic diagram illustrating the overall configuration of the position search system according to the first embodiment. A position search system 1 according to the first embodiment includes a tag 10 that sends a signal including identification information (for example, an ID), communication terminals 20A and 20B each of which receives the signal sent from the tag 10, and a server 30 that collects information from each of the communication terminals 20A and 20B.

The plurality of communication terminals 20A and 20B and the server 30 are connected with each other via a communication network N, and are able to perform data communication with another device. Furthermore, the configuration illustrated in FIG. 1 is one example, and a specific configuration and the number of devices are not particularly limited. Moreover, in the case where the communication terminals 20A and 20B are not particularly distinguished in a description, the communication terminals 20A and 20B are referred to as a communication terminal 20 as appropriate. In addition, the number of communication terminals 20 illustrated in FIG. 1 is one example.

The tag 10 is a terminal that sends a radio signal including an ID of the tag 10 (hereinafter, referred to as a tag ID) by using, for example, the standard for Bluetooth, or the like. For example, the tag 10 sets a specific object (for example, a bicycle, a valuable item, etc.), an elderly person, or a child as a retrieval target, is moved in accordance with a movement of the retrieval target, and, for example, periodically sends a signal. In the first embodiment, for example, as a result of the tag 10 being attached to the specific object, such as a bicycle or a valuable item, the tag 10 is moved together with the retrieval target.

The communication terminal 20 receives the signal that has been sent from the tag 10 and is, for example, a terminal device, such as a smartphone, a tablet, or mobile phone. Furthermore, the communication terminal 20A (a first communication terminal) is a terminal that is owned by a user (for example, an owner of the specific object or the like to which the tag 10 is attached) who manages the tag 10, and that is paired with the tag 10.

The communication terminal 20B (a second communication terminal) is a terminal that is owned by, for example, a cooperator of a retrieval, such as a volunteer served in a town. Furthermore, this sort of the communication terminal 20 may be owned by a delivery person belonging to a shipping company that provides a delivery service to various locations. Moreover, an application for retrieving, for example, a position of the tag 10 has already been downloaded into the communication terminal 20, and a process of receiving and retrieving the position of the tag 10 is performed by activating the application. Furthermore, the application may be mounted on the communication terminal 20B in advance, and may be constituted such that a process is performed without the owner consciously activating the application.

The server 30 collects positional information from the plurality of communication terminals 20A and 20B, specifying the position of the tag 10 by using the collected pieces of positional information, and outputs the information related to the specified position of the tag 10.

In the position search system according to the first embodiment, in the case where the tag 10 is able to communicate with the communication terminal 20A that is to be paired with the tag 10, and in the case where the presence of the communication terminal 20A is being sensed, or, in the case where communication with the communication terminal 20A is not able to be performed any longer, and in the case where the presence of the communication terminal 20A is no longer sensed, the tag 10 sends the first signal. Alternatively, the tag 10 sends the first signal after the pair with the communication terminal 20A has been canceled, or after the presence of the communication terminal 20A is no longer sensed, and in the case where the tag 10 is able to sense the presence of the communication terminal 20B with which the tag 10 is able to communicate. Furthermore, the tag 10 senses the presence of the communication terminal 20A, which is to be paired with the tag 10, by communicating with the communication terminal 20A to be paired with the tag 10 or receiving a signal that includes the name, the device type, and the ID of the communication terminal 20A.

Here, when the tag 10 is attached to a bicycle or a valuable item that is present in a house, a case in which the owner is away from the tag 10 while carrying the communication terminal 20A that is to be paired with the tag 10 occurs frequently. The reason for this is that the bicycle or the valuable item that is present in the house is less likely to always carry every time the owner goes out. In the case where communication between the communication terminal 20A of the owner and the tag is not able to be performed any longer, a possibility of a loss or a theft is conceivable, but if the tag 10 continuously outputs a signal with a long reach distance or increases the transmission frequency of the signal each time, battery consumption is increased accordingly.

In contrast, the bicycle or the valuable item placed in the house does not usually move by itself. Consequently, it is conceivable that a case in which the tag 10 senses its own movement in the case where the owner of the tag 10 is not located nearby is more likely to be a theft committed by another person.

Accordingly, in the first embodiment, in the case where a case of theft of a bicycle, a valuable item, or the like to which the tag 10 is attached seems to have occurred, the tag 10 sends a second signal that is used to increase a probability of finding the tag 10. Specifically, the tag 10 sends the second signal in the case where a movement of the tag 10 itself has been determined after the pair with the communication terminal 20A has been canceled, or, after the presence of the communication terminal 20A is no longer sensed. The second signal is a signal in which at least one of a transmission output and a transmission frequency has been increased to a level higher than that of the first signal.

In the case where a case of theft of the valuable item to which the tag 10 is attached occurs, a user or the like who possesses the valuable item reports that effect to an administrator of a security service. If this sort of report has been received, the server 30 causes each of the communication terminals 20A and 20B in which the application has been installed to activate the application. The application may be activated by the user by requesting each of the communication terminals 20A and 20B to activate the application, or the application may be automatically activated in accordance with an activation request made by the server 30. As a result, with the position search system, in addition to the communication terminal 20A, the communication terminal 20B serves as a sensor that receives the signal sent from the tag 10, so that the retrieval range of the tag 10 is temporarily increased.

For example, the communication terminal 20B receives the second signal sent from the missing tag 10, and transmits the tag ID of the tag 10 and the positional information on the communication terminal 20B at the time at which the communication terminal 20B received the signal to the server 30, so that the server 30 is able to specify the positional information on the tag 10. The server 30 notifies the communication terminal 20A that is possessed by the owner of, for example, the valuable item of the specified positional information on the tag 10.

In this way, only in a predetermined case in which a theft incident of a valuable item or the like has conceivably occurred, the tag 10 transmits, in order to increase a probability of finding the tag 10, the second signal in which at least one of a transmission output and a transmission frequency has been increased to a level higher than that of the first signal. The second signal consumes more electrical power than the first signal at the time of transmission, but the tag 10 limits the transmission of the second signal to only the predetermined case in which a theft incident of a valuable item or the like has conceivably occurred, that is, more specifically, to a case in which a movement of the tag 10 itself has been determined after the pair with the communication terminal 20A has been canceled, or, after the presence of the communication terminal 20A is no longer sensed. Then, in the case where a theft or the like is less likely to occur, the tag 10 is able to prevent wasteful consumption of the battery by sending the first signal in which electrical power consumed by the tag is reduced.

### [Configuration of tag]

In the following, a configuration of the tag 10 will be described with reference to FIG. 2. FIG. 2 is a block diagram illustrating an example of the configuration of the tag 10 according to the first embodiment. The tag 10 includes an electronic circuit, and an internal memory that stores therein control data and programs in which various kinds of procedures are prescribed. Furthermore, the tag 10 performs various kinds of processes by various kinds of programs being operated. As illustrated in FIG. 2, the tag 10 includes a determination unit 11, a setting unit 12, and a sending unit 13.

The determination unit 11 determines, by determining a position or a movement of the tag 10, whether or not the tag 10 itself has been moved. The determination unit 11 is, for example, an acceleration sensor or an inclination sensor. Alternatively, the determination unit 11 has a GPS function, compares a detection position of the tag 10 to a detection position of the tag 10 obtained last time, and determines whether or not the tag 10 has been moved. Alternatively, on the basis of, for example, a change in an access point of a wireless LAN that is present in the vicinity of the tag 10, a change in beacon information that reports a position, or a change in device information on Bleutooth for communicating with a beacon that is installed as a marker, the determination unit 11 determines a movement of the tag 10 by sensing these changes or by specifying the position of the tag 10. In addition, there is a method of specifying a position by picking up a sound wave transmitted from a transmitter that has been installed as a marker and sensing whether or not the tag 10 has been moved, but any method may be used to implement for sensing a movement of the tag 10. Furthermore, the positional information obtained by a GPS, the access point information on the wireless LAN, the beacon information for reporting the positional information, the information on the Bluetooth device that is installed to specify the position, or the like is stored in the internal memory included in the tag 10.

The setting unit 12 sets the signal that is to be sent by the tag 10 in accordance with whether or not the communication terminal 20 has been sensed and in accordance with the determination of the movement of the tag 10 obtained by the determination unit 11. The setting unit 12 sets the first signal as the signal to be sent by the tag 10 in the case where the presence of the communication terminal 20A is being sensed. The first signal is a signal with, for example, a send interval of "one second" and a reach distance of "10 m".

The setting unit 12 determines whether a case of theft of a valuable item, to which the tag 10 has been attached, seems to have occurred. In the case where a case of theft of a valuable item, to which the tag 10 has been attached, seems to have occurred, the setting unit 12 sets, as the signal sent by the tag 10, the second signal that is used to increase a probability of finding the tag 10.

Specifically, the setting unit 12 sets, as the signal to be sent by the tag 10, the second signal that is used to increase the probability of finding the tag 10 in the case where a movement of the tag 10 itself has been determined by the determination unit 11 after the pair with the communication terminal 20A has been canceled, or, after the presence of the communication terminal 20A is no longer sensed.

Then, in the case where it is determined that the tag 10 has been moved by an amount equal to or greater than a predetermined distance (for example, 10 m) after the pair with the communication terminal 20A has been canceled, or, after the presence of the communication terminal 20A is no longer sensed, the setting unit 12 may set the second signal as the signal that is to be sent by the tag 10. The reason for this is that, in the case where the tag 10 has been moved by a distance less than the predetermined distance, there may conceivably be a case in which the family of the owner changes the placement of the bicycle, the valuable item, or the like. Furthermore, the predetermined distance is set in advance, and in addition to this, a user who is an owner of the bicycle, the valuable item, or the like may be appropriately set.

The second signal is a signal in which at least one of a transmission output and a transmission frequency has been increased to a level higher than that of the first signal. The second signal is a signal in which the transmission output has been increased to a level higher than that of the first signal such that, for example, the reach distance is "50 m" at a send interval of "one second". Furthermore, the second signal may be a signal in which the transmission frequency has been increased to a level higher than that of the first signal such that, for example, the send interval is "0.5 seconds" at the time of the reach distance of "10 m". Alternatively, the second signal may be a signal in which both of the transmission output and the transmission frequency have been increased to levels higher than those of the first signal such that, for example, the send interval is "0.5 seconds" and the reach distance is "50 m".

Furthermore, the setting unit 12 may set, as the second signal, a signal in which at least one of a transmission output and a transmission frequency has been increased in accordance with a movement distance of the tag 10. The setting unit 12 may set the second signal such that at least one of the transmission output and the transmission frequency is increased in accordance with an increase in a period of time during which the communication terminal 20A is not able to be sensed. The setting unit 12 may set a plurality of types of signals as the second signal. For example, the setting unit 12 may set the signal with a send interval of "one second" and a reach distance of "50 m", and a signal with a reach distance of "10 m" and a send interval of "0.5 seconds" as the second signal.

The sending unit 13 sends the signal that has been set by the setting unit 12.

### [Configuration of communication terminal]

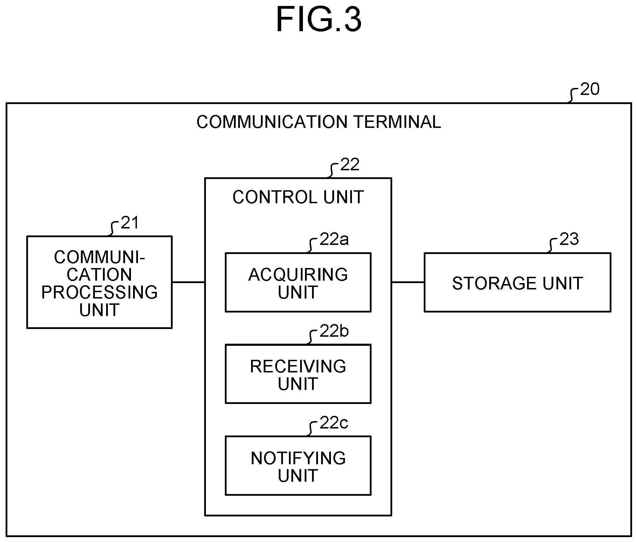

In the following, a configuration of the communication terminal 20 will be described with reference to FIG. 3. FIG. 3 is a block diagram illustrating an example of the configuration of the communication terminal according to the first embodiment. As illustrated in FIG. 3, the communication terminal 20 includes a communication processing unit 21, a control unit 22, and a storage unit 23. A process performed by each of the units included in the communication terminal 20 will be described below.

The communication processing unit 21 controls communication related to various kinds of information. For example, the communication processing unit 21 performs wireless communication, and receives a signal that has been sent from the tag 10.

The storage unit 23 stores therein data and programs that are needed for various kinds of processes performed by the control unit 22. For example, the storage unit 23 is a semiconductor memory device, such as a random access memory (RAM) or a flash memory, or a storage device, such as a hard disk or an optical disk.

The control unit 22 includes an internal memory that stores therein needed data and programs in which various kinds of processing procedures are prescribed, whereby the control unit 22 executes various kinds of processes, and includes, in particular, as closely related to the present invention, an acquiring unit 22a, a receiving unit 22b, and a notifying unit 22c. Here, the control unit 22 is an electronic circuit, such as a central processing unit (CPU) or a micro processing unit (MPU), or an integrated circuit, such as an application specific integrated circuit (ASIC) or a field programmable gate array (FPGA).

The acquiring unit 22a receives a request for activation of an application for retrieving a position of the tag 10 (hereinafter, appropriately referred to as a retrieval application) from the server 30. The retrieval application may be activated by a user who has checked the activation request, or may be automatically activated in accordance with the activation request made by the server 30. The retrieval application may be always activated. Furthermore, the acquiring unit 22a may also receive a tag ID that identifies the tag 10 of the retrieval target together with the request for the activation of the retrieval application.

The receiving unit 22b receives the signal sent from the tag 10 in the case where the retrieval application has been activated. For example, when the retrieval application is activated, the receiving unit 22b starts a process of receiving the signal sent from the tag 10, and, when the receiving unit 22b receives the signal from the tag 10 as a result of the tag 10 and the communication terminal 20 approaching each other, the receiving unit 22b notifies the notifying unit 22c of the reception of the signal.

Furthermore, in the case where the acquiring unit 22a continuously receives the tag ID of the retrieval target, the receiving unit 22b may determine whether the tag ID that is included in the received signal agrees with the tag ID of the retrieval target, and may notify the notifying unit 22c of the reception of the signal only when both of the tags ID agree with each other.

In the case where the ID that indicates, for example, the type of the signal (the first signal or the second signal) is included in the first signal and the second signal that are sent from the tag 10, that is, included in the received signal, the receiving unit 22b may determine the type of the signal on the basis of the ID. Furthermore, the receiving unit 22b may determine, as a method of determining the type of the received signal, the type of the signal on the basis of, for example, the number of signals that have been received from the same tag 10 within a certain period of time.

In the case where the signal has been received by the receiving unit 22b, the notifying unit 22c notifies the server 30 of the positional information of the own communication terminal 20 at the time of reception of the signal. For example, in the case where the signal has been received by the receiving unit 22b, the notifying unit 22c notifies the server 30 of the positional information on the own communication terminal 20 together with the tag ID of the tag 10 that is included in the received signal. Furthermore, the notifying unit 22c may estimate the distance between the tag 10 and the own device in accordance with the type of the signal that has been received by the receiving unit 22b, and may notify the server 30 of the information related to the position of the tag 10. Moreover, the positional information may be information that indicates the coordinates (latitude and longitude) of the own communication terminal 20 that is identified by using, for example, a Global Positioning System (GPS), or may be information that indicates a rough area that is identified by a base station connected by the own communication terminal 20.

### [Configuration of server]

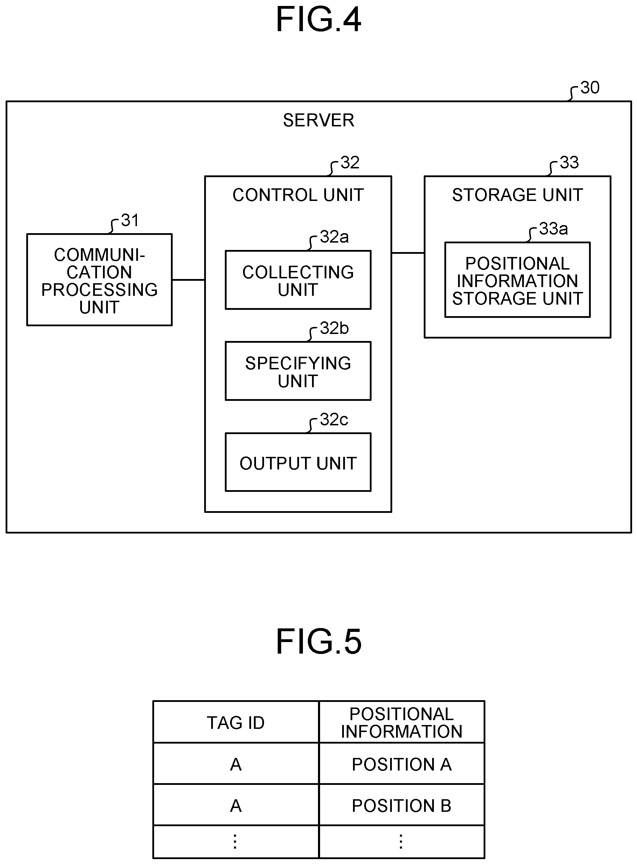

In the following, a configuration of the server 30 will be described with reference to FIG. 4. FIG. 4 is a block diagram illustrating an example of the configuration of the server according to the first embodiment. As illustrated in FIG. 4, the server 30 includes a communication processing unit 31, a control unit 32, and a storage unit 33. The processes performed by each of the units included in the server 30 will be described below.

The communication processing unit 31 controls communication related to various kinds of information that are sent and received between the communication terminals 20 connected each other. For example, the communication processing unit 31 receives the tag ID of the tag 10 and the positional information on the tag 10 from the communication terminal 20.

Furthermore, the storage unit 33 stores therein data and programs that are needed for various kinds of processes performed by the control unit 32, and includes, in particular, as closely related to the present invention, a positional information storage unit 33a. For example, the storage unit 33 is a semiconductor memory device, such as a RAM or flash memory, or a storage device, such as a hard disk or an optical disk.

The positional information storage unit 33a stores therein information for retrieving a position of the tag 10 collected from each of the communication terminals 20. For example, as illustrated in FIG. 5, the positional information storage unit 33a stores therein, in an associated manner, the "tag ID" that uniquely identifies the tag 10 and the "positional information" that indicates the position of the communication terminal 20A obtained when the signal sent from the tag 10 has been received. FIG. 5 is a diagram illustrating one example of the table stored by the positional information storage unit.

To explain with an example illustrated in FIG. 5, for example, the positional information storage unit 33a stores therein, in an associated manner, a tag ID "A" and positional information on "position A". This means that the communication terminal 20 has received the signal sent by the tag 10 with the tag ID of "A" at the "position A". Moreover, in the example illustrated in FIG. 5, a position A and a position B are simply illustrated as the positional information, but, in practice, it is assumed that the positional information storage unit 33a stores therein information for specifying, for example, longitude and latitude as the positional information.

The control unit 32 includes an internal memory for storing therein needed data and programs in which various kinds of processing procedures are prescribed, whereby the control unit 32 executes various kinds of processes, and includes, in particular, as closely related to the present invention, a collecting unit 32a, a specifying unit 32b, and an output unit 32c. Here, the control unit 32 is an electronic circuit, such as a CPU or an MPU, or an integrated circuit, such as an ASIC or a FPGA.

The collecting unit 32a collects the positional information from the plurality of communication terminals 20. For example, the collecting unit 32a collects positional information by transmitting a notification instruction to instruct each of the communication terminals 20 to send information as a notification at a predetermined time interval. Moreover, the collecting unit 32a may transmit the notification instruction at a timing of a predetermined operation performed by the user, or, alternatively, instead of transmitting the notification instruction, the collecting unit 32a may collect the positional information by receiving the information that has been transmitted at each of the timings of the respective communication terminals 20.

The specifying unit 32b specifies the position of the tag 10 by using the pieces of positional information collected by the collecting unit 32a. For example, the specifying unit 32b specifies the position of the tag 10 by sequentially narrowing down the places of the tag 10 every time the positional information is collected by the collecting unit 32a.

The output unit 32c outputs the information related to the position of the tag 10 that has been specified by the specifying unit 32b. For example, the output unit 32c may display an image in which a circle indicating an estimated range of the presence of the tag 10 has been added to a map that corresponds to the position of the tag 10 specified by the specifying unit 32b.

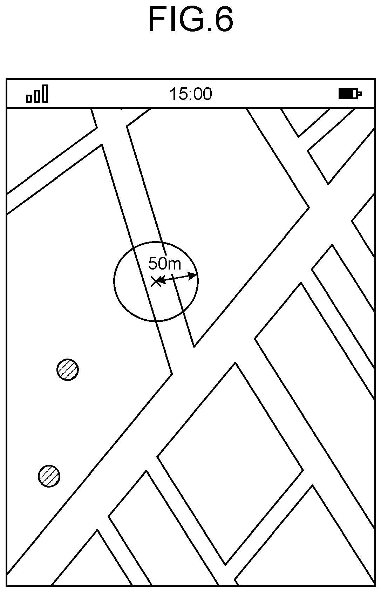

In the following, one example of a screen displayed on the communication terminal 20A will be described with reference to FIG. 6. FIG. 6 is a diagram illustrating one example of the screen displayed on the communication terminal 20A. As illustrated in FIG. 6 as an example, for example, in the case where it is specified that the tag 10 is present within a radius of 50 m from a point indicated by "x" on the map, the server 30 displays an image, in which a circle with the size corresponding to a reduced scale of the map has been added, as the circle around the point of "×" with a radius of 50 m, at a place corresponding to the position of the tag 10 on the map.

Moreover, the output unit 32c outputs the information related to the position of the tag 10 to only the communication terminal 20A belonging to the owner of the bicycle or the valuable item. In other words, instead of outputting the position of the tag 10 to all of the communication terminals 20, by outputting the position of the tag 10 to only the communication terminal 20A that is used by a specific user, the server 30 is able to prevent the personal information from being notified to unspecified persons.

### [Position search process]

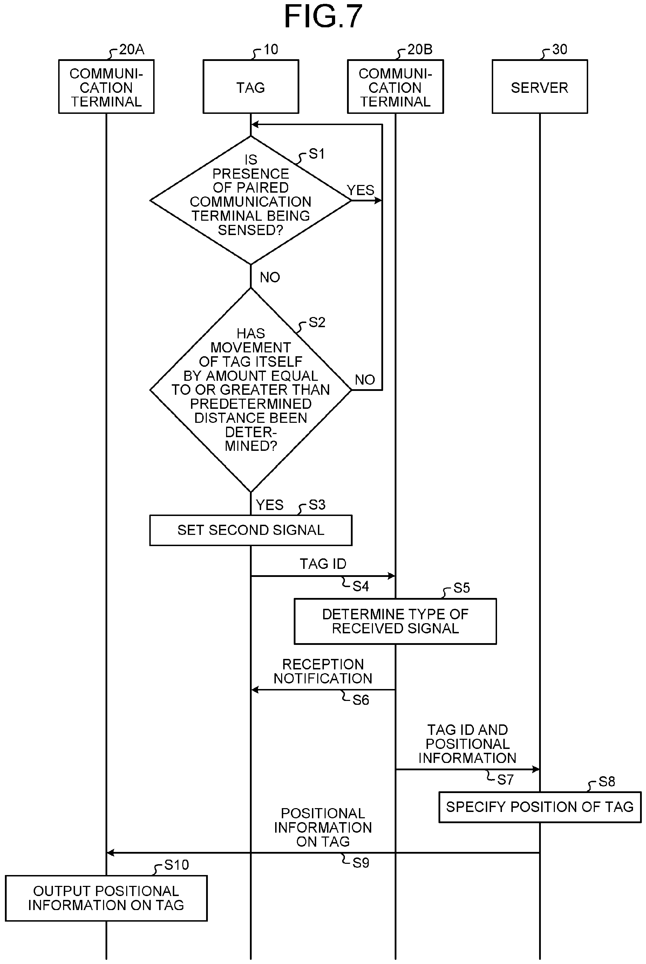

In the following, the flow of a series of processes performed in the position search system 1 will be described. FIG. 7 is a sequence diagram illustrating the processing procedure of a position search process according to the first embodiment.

As illustrated in FIG. 7 as an example, in the case where a case of theft of a bicycle, a valuable item, or the like, to which the tag 10 is attached, has occurred, a user or the like who possesses a valuable item, such as a bicycle or a valuable item, reports that effect to an administrator of a security service. When the server 30 receives such a report, the server 30 causes the communication terminal 20B in which the application has been installed to activate the application. Furthermore, the first signal that is to be sent by the tag 10 has been set to the tag 10 as the initial signal.

The tag 10 sends the first signal, and determines, on the basis of whether or not a receipt notification with respect to the first signal has been received from the communication terminal 20A, whether or not the presence of the communication terminal 20A is being sensed (Step S1). At this time, the tag 10 determines whether or not the pair with the communication terminal 20A has been canceled.

In the case where the presence of the communication terminal 20A is no longer sensed (No at Step S1), or, in the case where the pair with the communication terminal 20A has been canceled, the tag 10 determines whether or not a movement of the tag 10 itself made by an amount equal to or greater than a predetermined distance has been determined (Step S2). Moreover, at Step S2, in addition to the movement of the tag 10 at this time, the tag 10 may determine, on the basis of the movement history of the tag 10 stored in the internal memory, whether or not a movement of the tag 10 was made in the past as far back as the predetermined time period.

In the case where the presence of the communication terminal 20A has been sensed (Yes at Step S1), or, in the case where a movement of the tag 10 itself made by an amount equal to or greater than the predetermined distance is not determined (No at Step S2), the process returns to Step S1.

In contrast, in the case where a movement of the tag 10 itself made by an amount equal to or greater than the predetermined distance has been determined (Yes at Step S2), the tag 10 sets the second signal as the signal that is to be sent by the tag 10 (Step S3). Then, the tag 10 sends the second signal that includes the tag ID (Step S4).

In the case where the communication terminal 20B has received the second signal sent by the tag 10, and in the case where the ID that indicates the type of the signal is included in the received signal, that is, included in the second signal, the communication terminal 20B determines the type of the signal from this ID (Step S5). The communication terminal 20B sends a receipt notification indicating that the second signal has been received to the tag 10 that is the transmission source of the signal (Step S6). Then, the communication terminal 20B notifies the server 30 of the positional information on the own communication terminal 20B together with the tag ID of the tag 10 (Step S7).

The server 30 specifies the position of the tag 10 on the basis of the notification received from the communication terminal 20B (Step S8). The server 30 transmits the information related to the specified position of the tag 10 to the communication terminal 20A (Step S9), and causes the communication terminal 20A to output the information related to the position of the tag 10 (Step S10).

### [Effect of first embodiment]

In this way, in the first embodiment, after the pair between the tag 10 and the communication terminal 20A that is paired with the tag 10 has been canceled, or, after the presence of the communication terminal 20A is no longer sensed, in the case where the tag 10 determines that a movement of the tag 10 itself has been made, the tag 10 sends the second signal in which at least one of the transmission output and the transmission frequency has been increased. In other words, in the first embodiment, the signal sending operation that is needed to increase electrical power consumed by the tag 10 is limited to the case in which the communication terminal 20A belonging to the owner of the tag 10 is not present nearby, and, also, to the case in which the tag 10 itself has been moved.

Therefore, in the first embodiment, the second signal that is used to increase a probability of finding the tag 10 is transmitted only in the case where a case of theft of a bicycle, a valuable item, or the like to which the tag 10 is attached seems to have occurred, so that it is possible to efficiently a position search for the tag 10 while reducing an amount of consumption of a battery of the tag 10.

### [First modification of first embodiment]

After the positional information on the communication terminal 20B has been transmitted to server by the communication terminal 20B last time, in the case where tag 10 does not sense the movement of the tag 10 itself, it is conceivable that the positional information that has been transmitted last time is effective after that. Accordingly, the setting unit 12 included in the tag 10 sends the second signal, and, after the tag 10 has sensed the presence of the communication terminal 20B that is capable of performing communication, in the case where a movement of the tag 10 is not determined, or, in the case where a movement of the tag 10 made by a distance less than a predetermined distance (for example, less than 1 m) has been determined, the tag 10 sets the first signal as the signal that is to be sent.

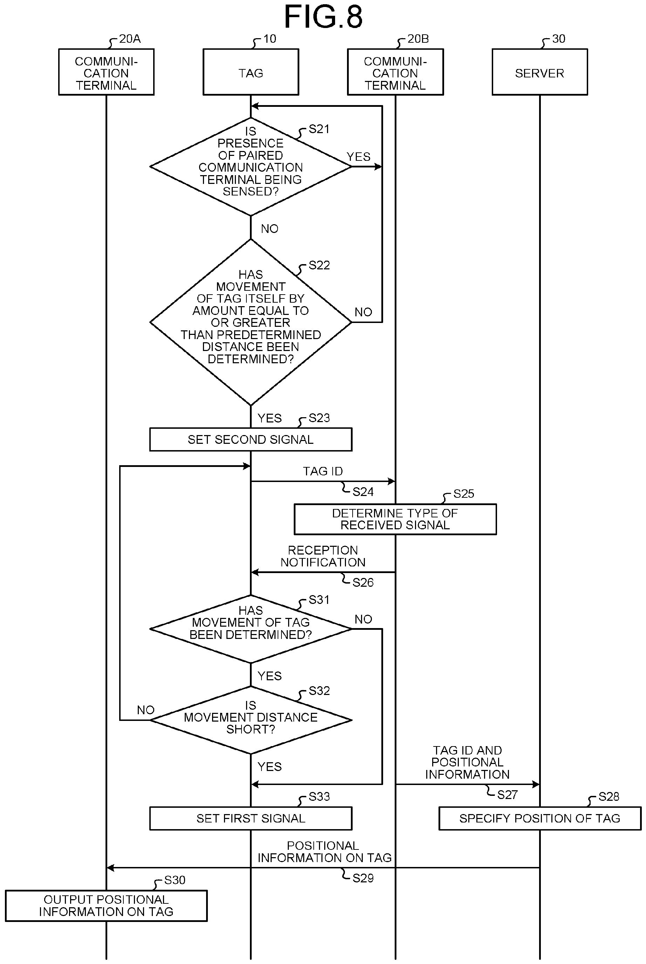

FIG. 8 is a sequence diagram illustrating a processing procedure of a position search process according to a first modification of the first embodiment. The steps S21 to S30 illustrated in FIG. 8 are the same as the Steps S1 to S10 illustrated in FIG. 7. When the tag 10 receives, from the communication terminal 20B, the receipt notification indicating that the second signal has been received, the tag 10 determines whether or not a movement of the tag 10 has been determined (Step S31).

In the case where a movement of the tag 10 itself has been determined (Yes at Step S31), the tag 10 determines whether or not a movement distance of the tag 10 is short (Step S32). For example, in the case where the tag 10 determines that a movement of the tag 10 has been made by a distance less than the predetermined distance (for example, less than 1 m), the tag 10 determines that the movement distance of the tag 10 is short.

In the case where a movement of the tag 10 itself is not determined (No at Step S31), or, in the case where the tag 10 determine that a movement distance of the tag 10 is short (Yes at Step S32), the tag 10 sets the first signal as the signal that is to be sent by the tag 10 (Step S33), returns to Step S21, sends the first signal, and determines whether or not the paired communication terminal 20A is being sensed. If the tag 10 determines that the movement distance of the tag 10 is long (No at Step S32), the tag 10 returns to Step S24, and continues to send the second signal.

In this way, even if the tag 10 determines that the communication terminal 20B capable of communicating is present last time, the tag 10 changes the signal that is to be sent to the first signal, in the case where it is determined that a movement of the tag 10 itself has not been made, or in the case where it is determined that the movement distance is small even when it is determined that the movement of the tag 10 itself has not been made. As a result of this, after that, even if a state in which the communication terminal 20B that is capable of communicating is not present nearby continues over a certain period of time, it is possible to further reduce an amount of consumption of a battery without sending the second signal that is used to increase a finding probability.

### [Second modification of first embodiment]

In the following a modification that is applicable to a case of a configuration in which a GPS is mounted on the tag 10 itself in order for the tag 10 to perform position determination or to a case of a configuration in which, by sensing a change obtained by an access point of a wireless LAN that is present in the vicinity of the tag 10, a movement of the tag 10 is determined in the case where the access point of the wireless LAN has been changed will be described.

In a case of using this configuration, the tag 10 is able to store therein the positional information on the positions in which the tag 10 passed by in the past on the basis of the position determination obtained by the GPS, and is able to acquire access point information on the wireless LAN and store therein the access points that are sensed in the past. Accordingly, the setting unit 12 included in the tag 10 stores, in the own tag, the area to which the tag 10 was moved in the past, and set the signal to be sent by referring to the area to which the tag 10 was moved in the past.

For example, in the case where the bicycle that is a target for the position search is usually used to go and return between one's home and a shopping center or the like located in the neighborhood, it is possible to determine that this route is not deviated from a normal movement route as long as the movement is made by using the same path. Specifically, as in a case in which a family borrows a bicycle and rides the bicycle, even if the communication terminal 20A to be paired is not present nearby, the tag 10 does not perform an operation in order to increase a finding probability by assuming this state as a family use as long as a movement is made by the same route.

In other words, even if the tag 10 is not able to sense the communication terminal 20A that is to be paired with the tag 10 and determines a movement of the tag 10, if the tag 10 determines, on the basis of the GPS information or the access point information on the wireless LAN, that the route is not deviated from the area that is stored by the tag and to which the tag 10 was moved in the past, the tag 10 sets continuation of the transmission of the first signal instead of the second signal that is used to increase a probability of finding of the tag 10. As a result of this, the tag 10 sends the second signal only at the time of an actual theft or the like, so that it is possible to reduce consumption of a battery.

Furthermore, for example, it is assumed that a case in which a child targeted for a position search goes and returns between a school and one's home. In such a case, a period of time in which the tag 10 is staying at one's home and the school is longer than that in another place. Accordingly, even if the tag 10 itself has sensed a movement of the tag 10 in a situation in which the communication terminal 20A or the like that serves as a parent terminal to be paired is not present nearby, the tag 10 does not send the second signal that is used to increase a probability of finding of the tag 10 in the case where the child stays at one's home or the school.

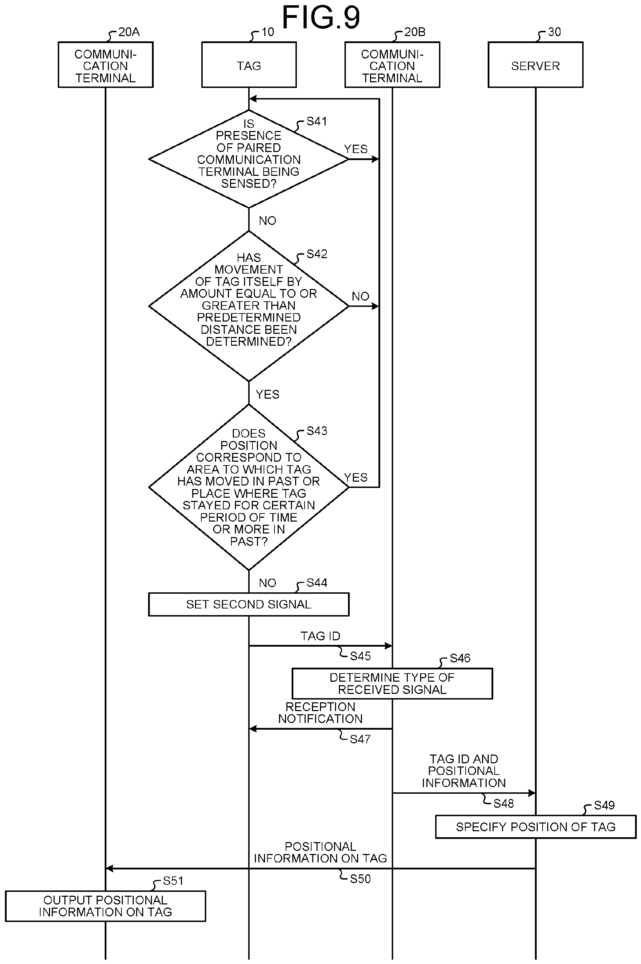

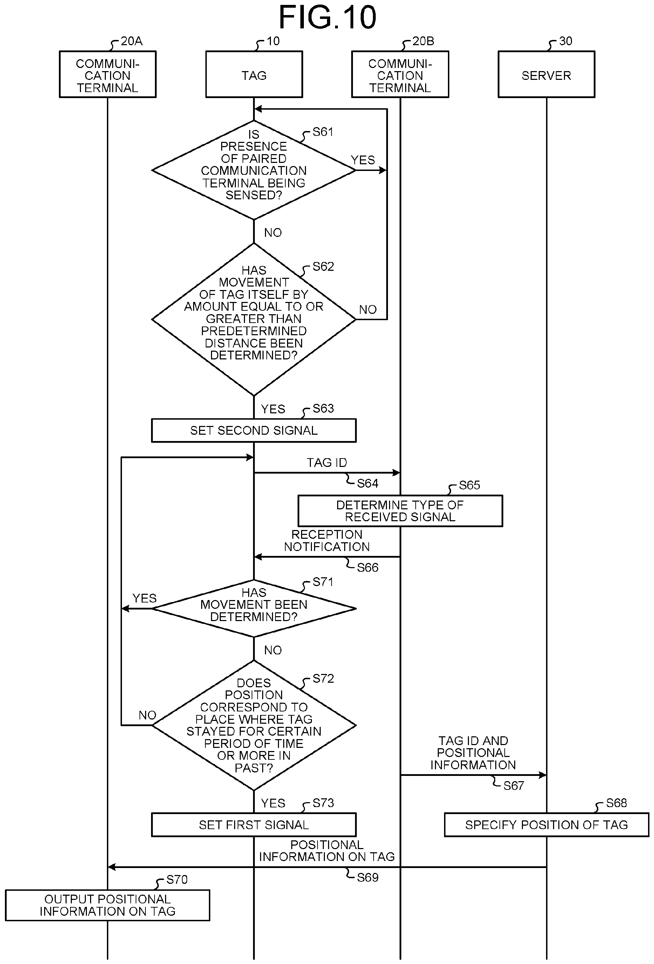

In other words, the tag 10 itself stores therein the place where the tag 10 stayed for more than a certain period of time in the past on the basis of the GPS information and the access point information on the wireless LAN, and if the tag 10 is located at the place where the tag 10 stayed for more than a certain period of time in the past, the tag 10 sets continuation of the transmission of the first signal instead of the second signal that is used to increase a probability of finding of the tag 10. As a result of this, the tag 10 sends the second signal that is used to increase the probability of finding the tag 10 only on the way to and back from the school after the child has left the child's home, so that it is possible to reduce consumption of a battery. A method of retrieving the processes performed in these cases will be described with reference to FIG. 9 and FIG. 10.

FIG. 9 is a sequence diagram illustrating a processing procedure of a position search process according to a second modification according to the first embodiment. The processes performed at Steps S41 and S42 illustrated in FIG. 9 are the same as those performed at Steps S1 and S2 illustrated in FIG. 7.

When the tag 10 determines a movement of the tag 10 itself made by an amount equal to or greater than a predetermined distance (Yes at Step S42), the tag 10 determines, on the basis of the GPS information and the access point information on the wireless LAN, whether or not the tag 10 is located in the area to which the tag 10 was moved in the past movement or is located at the place where the tag 10 stayed for a certain period of time or more in the past (Step S43). If the tag 10 is located in the area to which the tag 10 was moved in the past movement or is located at the place where the tag 10 stayed for a certain period of time or more in the past (Yes at Step S43), the process returns to Step S41, and the tag 10 continues to send the first signal.

If the tag 10 is not located in the area to which the tag 10 was moved in the past movement or is not located at the place where the tag 10 stayed for a certain period of time or more in the past (No at Step S43), the tag 10 sets the second signal as the signal that is to be sent by the tag 10 (Step S44). The processes performed at Step S45 to Step S51 illustrated in FIG. 9 are the same as those performed at Step S4 to Step S10 illustrated in FIG. 7.

FIG. 10 is a sequence diagram illustrating another processing procedure of a position search process according to the second modification of the first embodiment. The processes performed at Step S61 to Step S70 illustrated in FIG. 10 are the same as those performed at Step S1 to Step S10 illustrated in FIG. 7. After the tag 10 has received a receipt notification from the communication terminal 20B, if the tag 10 determines a movement of the tag 10 (Yes Step S71), the process returns to Step S64, and the tag 10 continues to send the second signal that is used to increase the probability of finding the tag 10.

In contrast, after the tag 10 has received a receipt notification from the communication terminal 20B, the tag 10 determines that a movement of the tag 10 itself has not been made (No at Step S71), the tag 10 determines whether or not the tag 10 is located at the place where the tag 10 stayed for a certain period of time or more in the past (Step S72). If the tag 10 is not located at the place where the tag 10 stayed for a certain period of time or more in the past (No at Step S72), the process returns to Step S64, and the tag 10 continues to send the second signal. In contrast, if the tag 10 is located at the place where the tag 10 stayed for a certain period of time or more in the past (Yes at Step S72), the tag 10 sets the first signal as the signal that is to be sent by the tag 10, instead of the second signal that is used to increase the probability of finding of the tag 10 (Step S73).

### [Third modification of first embodiment]

For example, there may be a case in which a thief or the like has the communication terminal 20 that is pretended to be able to communicate, and carries a bicycle, a valuable item, or the like, to which the tag 10 has been attached, together with the communication terminal 20 to prevent the tag 10 from sending the second signal, which makes it difficult for the other communication terminal 20 to sense the theft or the like.

Accordingly, regarding the communication terminal 20 that is able to communicate and that has been sensed by the tag 10 that the communication terminal 20 is present nearby, if it is determined that the communication terminal located in the vicinity of the tag 10 is only the same communication terminal 20 for a predetermined time (for example, 30 minutes) or more, the tag 10 sends the second signal in order to increase the probability of finding the tag 10.

In other words, the setting unit 12 included in the tag 10 sends the second signal, and, after the tag 10 has sensed the presence of the communication terminal 20B that is able to communicate, if the communication terminal 20 that is able to communicate is the same communication terminal for the predetermined time period or more, the tag 10 sets continuation of the transmission of the second signal. As a result of this, it is possible to prevent a theft of a bicycle, a valuable item, or the like, to which the tag 10 has been attached, occurring as a result of, for example, a thief or the like having the communication terminal 20 that is pretended to be able to communicate and carrying the communication terminal 20 together with the tag 10 from being less likely to be sensed by the other communication terminal 20.

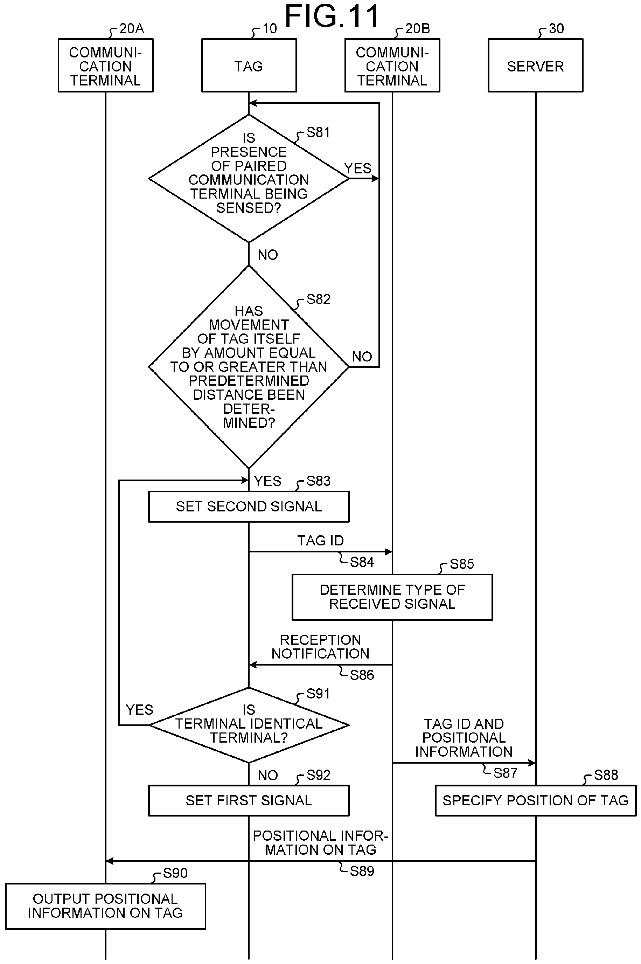

FIG. 11 is a sequence diagram illustrating another processing procedure of a position search process according to the third modification of the first embodiment. The processes performed at Step S81 to Step S90 illustrated in FIG. 11 corresponds to the processes performed at Step S1 to Step S10 illustrated in FIG. 7. After the tag 10 has received the receipt notification from the communication terminal 20B, the tag 10 determines whether or not the communication terminal 20B that is able to be communicated with the tag 10 is the same communication terminal for a predetermined time period or more (Step S91). If the communication terminal 20B that is able to be communicated with the tag 10 is the same communication terminal for a predetermined time period or more (Yes at Step S91), the process returns to Step S83, and the tag 10 continues to send the second signal that is used to increase the probability of finding the tag 10. In contrast, if the communication terminal 20B that is able to be communicated with the tag 10 is not the same communication terminal for a predetermined time period or more (No at Step S91), the tag 10 sets the first signal that is the signal to be sent by the tag 10 (Step S92).

### [Second Embodiment]

In the following, a second embodiment will be described. In the second embodiment, in a state in which the tag is paired with the communication terminal of the owner of the tag, after the pair with the communication terminal has been canceled, or after the presence of the communication terminal is no longer sensed, if the tag does not sense the presence of another communication terminal that is able to communicate, the tag sends a signal in which at least one of a transmission output and a transmission frequency is increased. In this way, by limiting the signal sending operation, such as an operation of increasing electrical power consumed by the tag, to a case in which the communication terminal of the owner of the tag is not present nearby, and, also, to the case in which the tag does not sense the presence of the other communication terminal that is able to communicate, the electrical power consumption of the battery of the tag is reduced in the case where a possibility of a stray child, a theft, or the like is low.

### [Configuration of position search system]

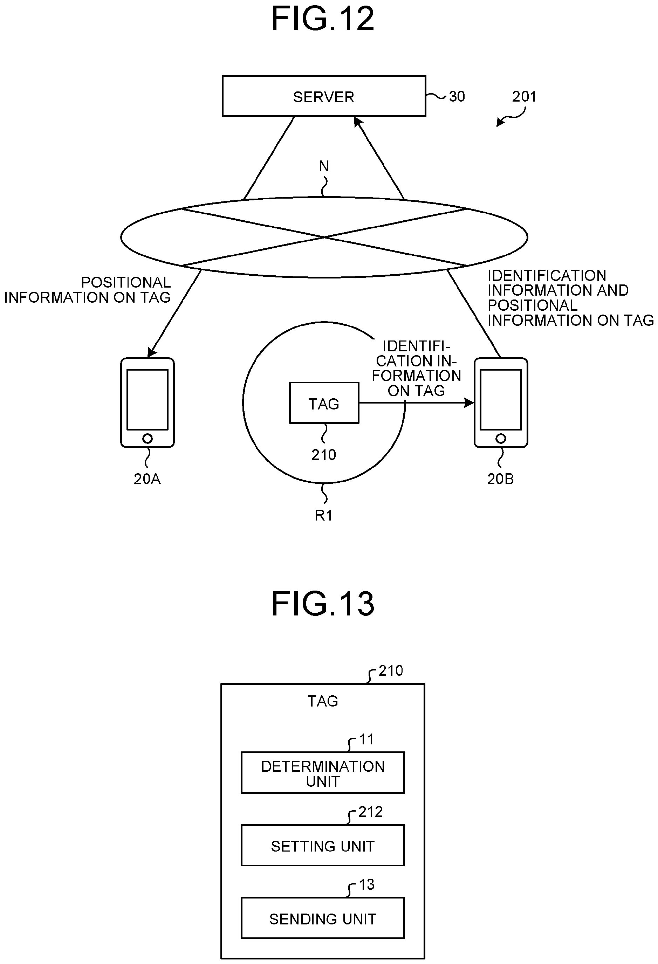

FIG. 12 is a schematic diagram illustrating the overall configuration of a position search system according to the second embodiment. A position search system 201 according to the first embodiment includes a tag 210 that sends a signal that includes the tag ID, instead of the tag 10 as compared to the position search system 1 illustrated in FIG. 1.

Here, as the specification of Bluetooth, it is possible to determine whether or not a terminal that is able to communicate is present in a relatively narrow area R1 (in general, within roughly about 10 m). For example, a case will be described as an example in which, if an elderly person or a child who carries the tag 210 gets lost and moves to a place with less people, the tag 210 uses a function of Bluetooth and has sensed that the communication terminal 20 that is able to communicate is not present nearby.

Similarly to the tag 10, the tag 210 sends the first signal in the case where the presence of the communication terminal 20A that is to be paired with the tag 210 is being sensed. Then, if a situation in which the communication terminal 20 is not able to be sensed in the area R1 continues for a certain period of time or more, the tag 210 sends the second signal that is used to increase the probability of finding the tag 210.

In this way, in the second embodiment, the tag 210 normally sends the first signal in a place with a lot of people, and, sends the second signal in which at least one of the transmission output and the transmission frequency has been increased in a case of a place where there seems to be no people in the surroundings, so that a probability of finding the tag 210 is increased.

### [Configuration of tag]

In the following, a configuration of the tag 210 will be described with reference to FIG. 13. FIG. 13 is a block diagram illustrating an example of the configuration of the tag 210 according to the second embodiment. The tag 210 includes a setting unit 212 instead of the setting unit 12 included in the tag 10 illustrated in FIG. 2.

The setting unit 212 sets a signal that is sent by the tag 210 in accordance with whether the communication terminal 20 has been sensed. The setting unit 212 sets the first signal as the signal that is sent by the tag 210 in the case where the presence of the communication terminal 20A is being sensed.

The setting unit 212 sets the second signal as the signal that is sent by the tag 210 in the case where a person who has the tag 210 has seemingly become lost, or in the case where a case of theft of a valuable item to which the tag 210 is attached has seemingly occurred.

Specifically, in a state in which a communication terminal 210A of the owner of the tag 210 is paired, after the pair with the communication terminal 210A has been canceled, or, after the presence of the communication terminal 20A is no longer sensed, in the case where presence of another communication terminal (for example, the communication terminal 20B) with which the tag 210 is able to communicate is not sensed, the setting unit 212 sets the second signal that is used to increase a probability of finding the tag 210 as the signal that is to be sent by the tag 210.

Then, after the pair with the communication terminal 210A has been canceled, or, after the presence of the communication terminal 20A is no longer sensed, in the case where the presence of the other communication terminal (for example, the communication terminal 20B) with which the tag 210 is able to communicate is not sense for a predetermined time period (for example, 30 minutes) or more, the setting unit 212 sets the second signal that is used to increase the probability of finding the tag 210 as the signal that is to be sent by the tag 210.

### [Position search process]

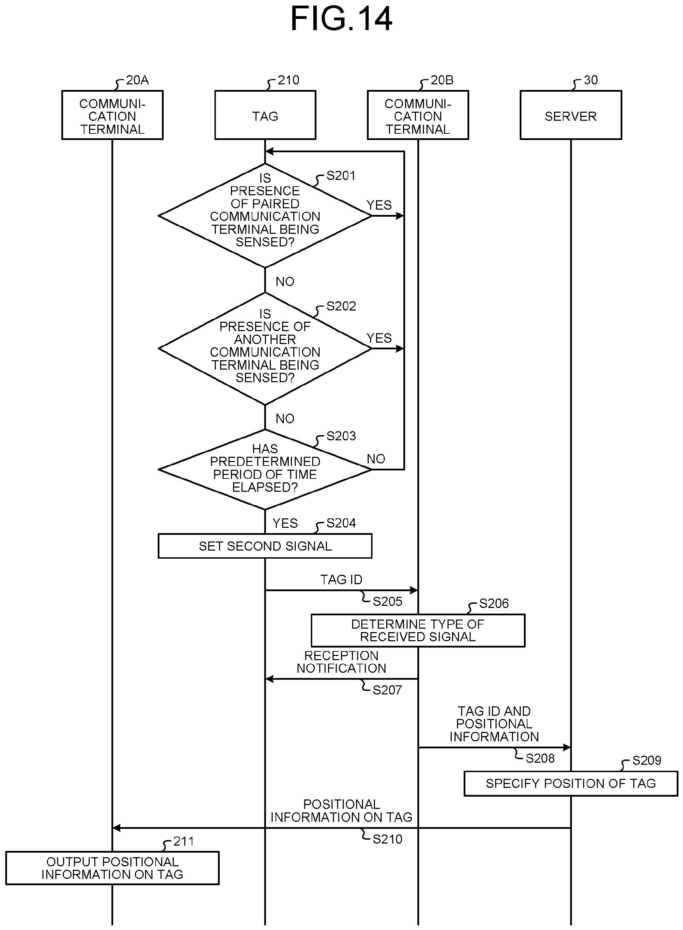

In the following, the flow of a series of processes performed in the position search system 201 will be described. FIG. 14 is a sequence diagram illustrating a processing procedure of a position search process according to the first embodiment.

The process performed at Step S201 illustrated in FIG. 14 is the same as that performed at Step S1 illustrated in FIG. 7. If the first signal has been sent, and the presence of the communication terminal 20A is no longer sensed on the basis of whether or not the receipt notification with respect to the sent first signal has been received from the communication terminal 20 (No at Step S201), or, if the pair with the communication terminal 20A has been canceled, the tag 210 sends the first signal, and determines whether the presence of the other communication terminal 20 is being sensed on the basis of whether or not the receipt notification with respect to the sent first signal has been received from the communication terminal 20 (Step S202).

If the presence of the other communication terminal 20 is not sensed (No at Step S202), it is determined whether or not a predetermined time has elapsed from the state in which the presence of the other communication terminal 20 is not being sensed (Step S203) .

If the presence of the other communication terminal 20 has been sensed (Yes at Step S202), or, if a predetermined time is not elapsed from the state in which the presence of the other communication terminal 20 is not being sensed (No at Step S203), the process returns to Step S201.

If a predetermined time has elapsed from the state in which the presence of the other communication terminal 20 is not being sensed (Yes at Step S203), the tag 210 sets the second signal as the signal that is to be sent by the tag 210 (Step S204). Then, the tag 210 sends the second signal including the tag ID (Step S205). The processes performed at Step S206 to Step S211 illustrated in FIG. 14 are the same as those performed at Step S5 to Step S10 illustrated in FIG. 7.

### [Effects of second embodiment]

In this way, in the second embodiment, after the pair between the tag 210 and the communication terminal 20A that is paired with the tag 210 has been canceled, or, after the presence of the communication terminal 20A is no longer sensed, if the presence of the other communication terminal 20 is not sensed, the tag 210 sends the second signal in which at least one of the transmission output and the transmission frequency has been increased. In other words, in the second embodiment, the signal sending operation of increasing electrical power consumed by the tag 210 is limited to the case in which the communication terminal 20A belonging to the owner of the tag 210 is not present nearby, and, also, the case in which the presence of the other communication terminal 20 is not sensed.

Therefore, in the second embodiment, the second signal that is used to increase a probability of finding the tag 210 is transmitted only in the case where a disappearance of an elderly person or a child who has the tag 210 seems to have occurred, or, a case of theft of bicycle, a valuable item, or the like, to which the tag 210 is attached, seems to have occurred, so that it is possible to efficiently a position search for the tag 210 while reducing an amount of consumption of the battery of the tag 210.

Moreover, after the tag 210 has received the receipt notification from the other communication terminal 20B (Step S207), and performs the processes at Step S71 to Step S73 illustrated in FIG. 10, if the tag 210 determines that a movement has not been made and determines that a movement distance is short, the tag 210 may set the first signal as the signal that is to be sent by the tag 210.

Furthermore, after the tag 210 has received the receipt notification from the other communication terminal 20B (Step S207), if it is determined that the communication terminal 20 that is located near the tag 210 is only the identical communication terminal 20 as a result of the tag 210 performing the processes at Steps S91 and S92 illustrated in FIG. 11, the tag 210 may send the second signal in order to increase the probability of finding the tag 210.

### [First modification of second embodiment]

A modification that is applicable to a case of configuration in which a GPS is mounted on the tag 210 itself in order for the tag 210 to perform position determination or a case of a configuration in which an access point of a wireless LAN that is present in the vicinity of the tag 210 senses whether or not a change has been made will be described.

For example, it is assumed that a case in which a child targeted for a position search goes and returns between a school and one's home. In such a case, a period of time in which the tag 210 is staying at one's home and the school is longer than that in another place. Accordingly, even if the communication terminal 20B owned by another person that sends the positional information is not present in the vicinity of the tag 210 in a situation in which the communication terminal 20A or the like that serves as a parent terminal to be paired is not present nearby, the tag 210 does not send the second signal that is used to increase the probability of finding the tag 210 in the case where the child stays at the child's home or the school.

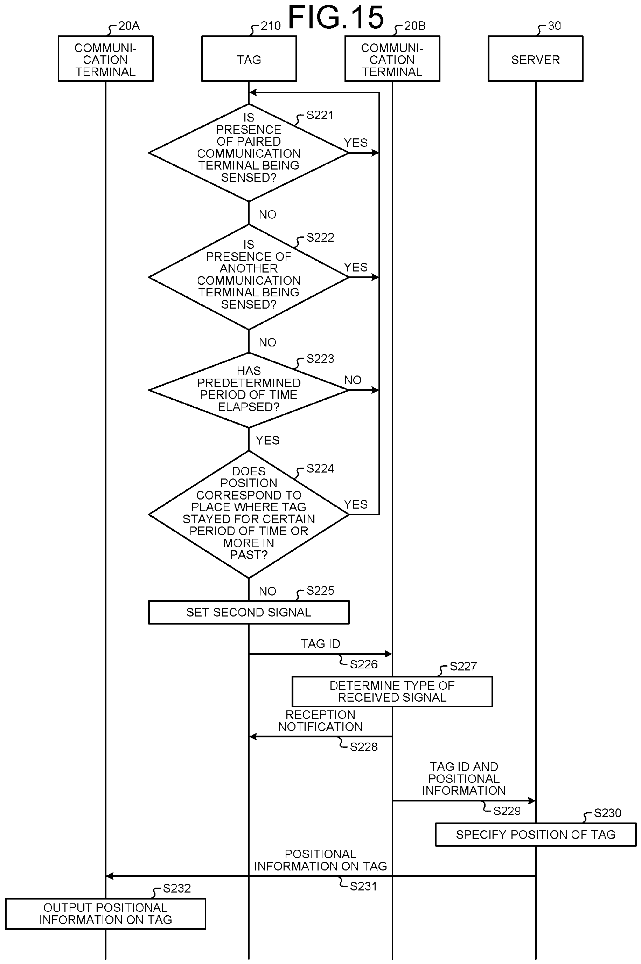

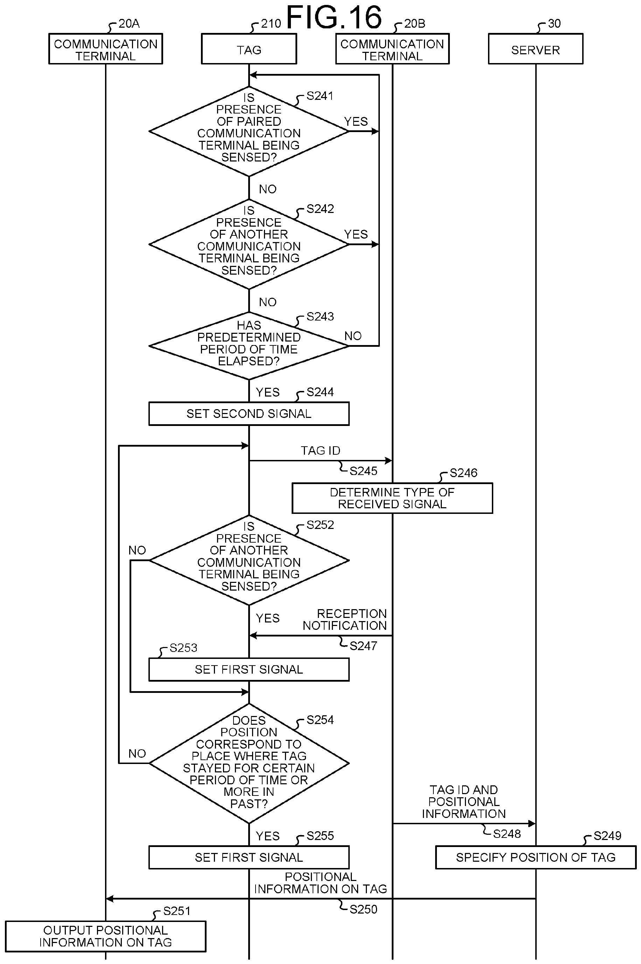

In other words, the tag 210 itself stores therein the place in which the tag 210 stays for more than a certain period of time in the past on the basis of the GPS information and the access point information on the wireless LAN, and if the tag 210 is located at the place in which the tag 210 stays for more than a certain period of time in the past, the tag 210 sets continuation of the transmission of the first signal instead of the second signal that is used to increase a probability of finding of the tag 210. As a result of this, the tag 10 sends the second signal that is used to increase the probability of finding the tag 10 only on the way to and back from the school after the child has left the child's home, so that it is possible to reduce consumption of a battery. A method of retrieving the processes performed in these cases will be described with reference to FIG. 15 and FIG. 16.

FIG. 15 is a sequence diagram illustrating a processing procedure of a position search process according to a first modification of the second embodiment. The processes performed at Steps S221 to S223 illustrated in FIG. 15 are the same as those performed at Steps S201 to S203 illustrated in FIG. 14.

If a predetermined time has elapsed in a state in which the presence of the other communication terminal 20 is not sensed (Yes at Step S223), the tag 210 determines whether or not the tag 210 is located at a place where the tag 210 stayed for a certain period of time or more in the past (Step S224).

If the tag 210 is located at the place where the tag 210 stayed for a certain period of time or more in the past (Yes at Step S224), the process returns to Step S221, and the tag 210 continues to send the first signal. If the tag 210 is not located at the place where the tag 210 stayed for a certain period of time or more in the past (No at Step S224), the tag 210 sets the second signal as the signal that is to be sent by the tag 210 (Step S225). The processes performed at Step S226 to Step S232 illustrated in FIG. 15 are the same as those performed at Step S4 to Step S10 illustrated in FIG. 7.

FIG. 16 is a sequence diagram illustrating another processing procedure of the position search process according to the first modification of the second embodiment. The processes performed at Steps S241 to S251 illustrated in FIG. 16 are the same as those performed at Steps S201 to S211 illustrated in FIG. 14.

The tag 210 determines whether or not the presence of the other communication terminal 20 is being sensed on the basis whether or not the receipt notification has been received from the communication terminal 20B (Step S252). If the tag 210 has received the receipt notification from the communication terminal 20B (Step S247), and senses the presence of the other communication terminal 20 (Yes at Step S252), the tag 210 sets the first signal as the signal that is to be sent by the tag 210 (Step S253), and proceeds to Step S254.

If the tag 210 does not sense the presence of the other communication terminal 20 (No at Step S252), the tag 210 determines whether or not the tag 210 is located at the place where the tag 210 stayed for a certain period of time or more in the past (Step S254). If the tag 210 is located at the place where the tag 210 stayed for a certain period of time or more in the past (Yes at Step S254), the tag 210 sets the first signal as the signal that is to be sent by the tag 210 (Step S255), and returns to Step S241. If the tag 210 is not located at the place where the tag 210 stayed for a certain period of time or more in the past (No at Step S254), the process returns to Step S245, and the tag 210 continues to send the second signal.

### [Third Embodiment]

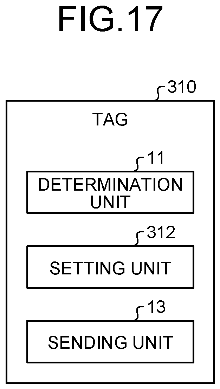

In the following, a third embodiment will be described. In the third embodiment, a combination of the first embodiment and the second embodiment will be described as an example. FIG. 17 is a block diagram illustrating an example of a configuration of a tag according to the third embodiment.

As illustrated in FIG. 17, a tag 310 according to the third embodiment includes a setting unit 312 instead of the setting unit 12 included in the tag 10 illustrated in FIG. 2.

The setting unit 312 sets the first signal as the signal that is to be sent by the tag 310, in the case where the presence of the communication terminal 20A is being sensed. After the pair with the communication terminal 20A has been canceled, or, after the presence of the communication terminal 20A is no longer sensed, in the case where the presence of the other communication terminal 20 (the second communication terminal) with which the tag 310 is able to communicate is not sensed, the setting unit 312 sets the second signal that the signal that is to be sent by the tag 310.

### [Position search process]

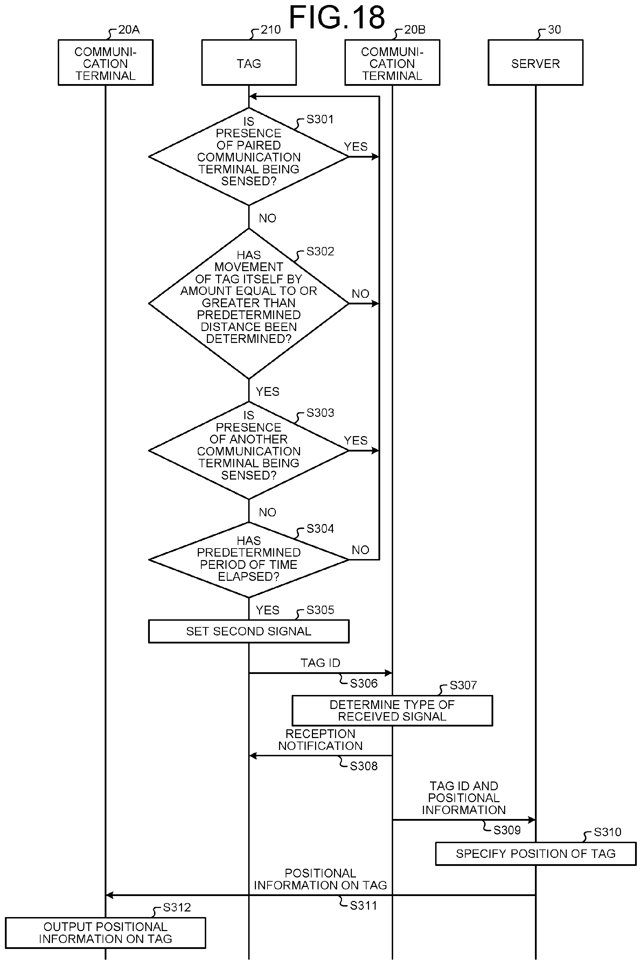

FIG. 18 is a sequence diagram illustrating a processing procedure of a position search process according to the third embodiment. The processes performed at Steps S301 and S302 illustrated in FIG. 18 are the same as those performed at Steps S1 and S2 illustrated in FIG. 7. The processes performed at Steps S303 and S304 illustrated in FIG. 18 are the same as those performed at Steps S202 and S203 illustrated in FIG. 14. The processes performed at Step S305 to Step S312 are the same as those performed at Step S3 to Step S10 illustrated in FIG. 7.

As in the third embodiment, by limiting a send condition of the second signal as compared to the first and the second embodiments, it may further reduce an amount of consumption of a battery of the tag 310.

Moreover, in the operation performed by each the tags 10, 210, and 310 in order to increase a finding probability, regarding the signal that is sent from each of the tags 10, 210, and 310, a high power signal and a low power signal may be used in combination. If the communication terminal 20B receives a high power signal, the server 30 notifies the owners of the tags 10, 210, and 310 of the positions of the tags 10, 210, and 310, respectively, whereas, if the communication terminal 20B receives a low power signal, the server 30 may notify the communication terminal 20A of the owners of the tags 10, 210, and 310 of a pinpoint positions of the tags 10, 210, and 310, respectively. Furthermore, also regarding the transmission frequency of the signal, each of the tags 10, 210, and 310 may use a different transmission frequency between the high power signal and the low power signal at the time of transmission.

### [System configuration, etc.]

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. In addition, all or any part of each of the processing functions performed by the each of the devices can be implemented by a CPU and by programs analyzed and executed by the CPU or implemented as hardware by wired logic.

Furthermore, of the processes described in the embodiment, the whole or a part of the processes that are mentioned as being automatically performed can also be manually performed, or the whole or a part of the processes that are mentioned as being manually performed can also be automatically performed using known methods. Furthermore, the flow of the processes, the control procedures, the specific names, and the information containing various kinds of data or parameters indicated in the above specification and drawings can be arbitrarily changed unless otherwise stated.

### [Program]

Furthermore, it is possible to generate a program in which a process to be executed by each of the communication terminal 20 and the server 30 described above in the embodiments is described in a computer executable language. For example, it is possible to generate a position search program in which the processes performed by the communication terminal 20 and the server 30 according to the embodiments are described in a computer executable language. In this case, it is possible to obtain the same effects as those described above in the embodiments by the computer executing the position search program. In addition, it may be possible to implement the same processes as those described above in the embodiments by recording the position search program into a computer readable recording medium and allow the computer to read the position search program recorded in the recording medium.

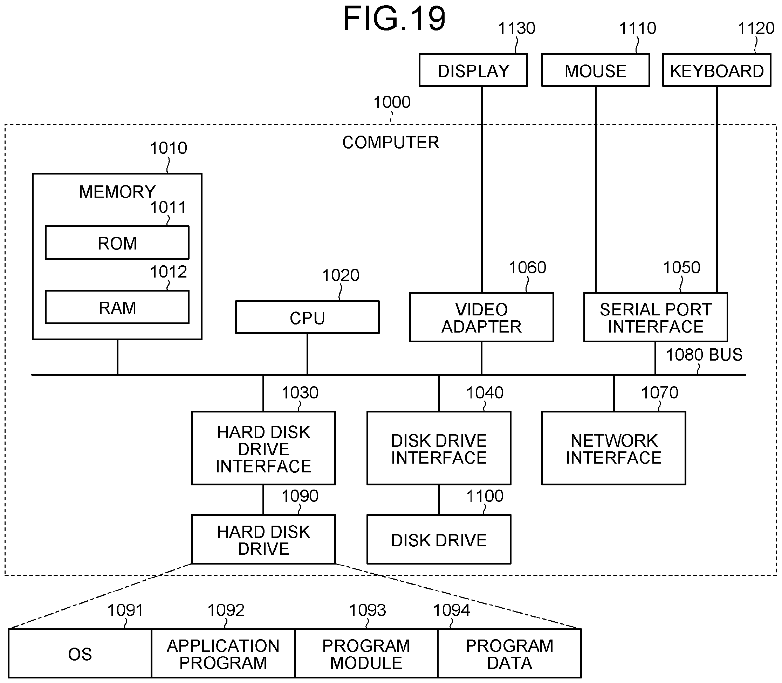

FIG. 19 is a diagram illustrating a computer that executes the position search program. As illustrated in FIG. 19, a computer 1000 includes, for example, a memory 1010, a central processing unit (CPU) 1020, a hard disk drive interface 1030, a disk drive interface 1040, a serial port interface 1050, a video adapter 1060, and a network interface 1070, and each of the units is connected by a bus 1080.

The memory 1010 includes, as illustrated as an example in FIG. 19, a read only memory (ROM) 1011 and a RAM 1012. The ROM 1011 stores therein, for example, a boot program, such as a basic input output system (BIOS). The hard disk drive interface 1030 is connected to a hard disk drive 1090 as illustrated as an example in FIG. 19. The disk drive interface 1040 is connected to a disk drive 1100 as illustrated as an example in FIG. 19. For example, a detachable storage medium, such as a magnetic disk or an optical disk, is inserted into the disk drive 1100. The serial port interface 1050 is connected to, as illustrated as an example in FIG. 19, for example, a mouse 1110 and a keyboard 1120. The video adapter 1060 is connected to, as illustrated as an example in FIG. 19, for example, a display 1130.

Here, as illustrated as an example in FIG. 19, the hard disk drive 1090 stores therein, for example, an OS 1091, an application program 1092, a program module 1093, and program data 1094. In other words, the above described position search program is stored, as a program module in which commands executed by the computer 1000 are described, in, for example, the hard disk drive 1090.

Furthermore, various kinds of data described above in the embodiments are stored in, as the program data, for example, the memory 1010 or the hard disk drive 1090. Then, the CPU 1020 reads the program module 1093 or the program data 1094 stored in the memory 1010 or the hard disk drive 1090 as needed into the RAM 1012 and executes various kinds of processing procedures.

Moreover, the program module 1093 or the program data 1094 according to the position search program may be stored in, for example, a detachable storage medium as well as being stored in the hard disk drive 1090, and then may be read out by the CPU 1020 via the disk drive or the like. Alternatively, the program module 1093 or the program data 1094 according to the position search program may be stored in another computer that is connected via a network (a local area network (LAN), a wide area network (WAN), etc.), and then may be read out by the CPU 1020 via the network interface 1070.

The above described embodiments and modifications of each of the embodiments are included in the technology disclosed in the present invention and are also included in the invention described in the accompanying claims and their equivalents.

### [Explanation of Reference]

1, 201 position search system
10, 210, 310 tag
11 determination unit
12, 212, 312 setting unit
13 sending unit
20, 20A, 20B communication terminal
21, 31 communication processing unit
22, 32 control unit
22a acquiring unit
22b receiving unit
22c notifying unit
23, 33 storage unit
30 server
32a collecting unit
32b specifying unit
32c output unit
33a positional information storage unit

## Claims

1. A position search system comprising:
a tag that sends a signal that includes identification information;
a plurality of communication terminals each of which receives the signal that is sent by the tag; and
a server that collects information from the communication terminals each of which has received the signal sent by the tag, wherein
the tag includes
a determination unit configured to determine whether or not a movement has been made by the tag,
a setting unit configured to
set, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, and
set, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed, and
a sending unit configured to send the signal that has been set by the setting unit,
the communication terminal includes
a receiving unit configured to receive the signal that has been sent from the tag, and
a notifying unit configured to notify the server of identification information on the tag included in the signal received from the tag, and positional information on the own communication terminal at the time of reception of the signal, and
the server includes
a collecting unit configured to collect, from the plurality of communication terminals, identification information on the tag and the positional information on the tag,
a specifying unit configured to specify a position of the tag by using the positional information collected by the collecting unit, and
an output unit configured to output information related to the position of the tag that has been specified by the specifying unit.

2. A position search system comprising:
a tag that sends a signal that includes identification information;
a plurality of communication terminals each of which receives the signal that is sent by the tag; and
a server that collects information from the communication terminals each of which has received the signal sent by the tag, wherein
the tag includes
a determination unit configured to determine whether or not a movement has been made by the tag,
a setting unit configured to
set, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, and
set, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed and when presence of a second communication terminal with which the tag is able to communicate is not sensed, and
a sending unit configured to send the signal that has been set by the setting unit,
the communication terminal includes
a receiving unit configured to receive the signal that has been sent from the tag, and
a notifying unit configured to notify the server of identification information on the tag included in the signal received from the tag, and positional information on the own communication terminal at the time of reception of the signal, and
the server includes
a collecting unit configured to collect, from the plurality of communication terminals, identification information on the tag and the positional information on the tag,
a specifying unit configured to specify a position of the tag by using the positional information collected by the collecting unit, and
an output unit configured to output information related to the position of the tag that has been specified by the specifying unit.

3. A position search system comprising:
a tag that sends a signal that includes identification information;
a plurality of communication terminals each of which receives the signal that is sent by the tag; and
a server that collects information from the communication terminals each of which has received the signal sent by the tag, wherein
the tag includes
a determination unit configured to determine whether or not a movement has been made by the tag,
a setting unit configured to
set, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, and
set, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed, or, when the movement of the tag has been determined and also when presence of a second communication terminal with which the tag is able to communicate is not sensed for a certain period of time or more, and
a sending unit configured to send the signal that has been set by the setting unit,
the communication terminal includes
a receiving unit configured to receive the signal that has been sent from the tag, and
a notifying unit configured to notify the server of identification information on the tag included in the signal received from the tag, and positional information on the own communication terminal at the time of reception of the signal, and
the server includes
a collecting unit configured to collect, from the plurality of communication terminals, identification information on the tag and the positional information on the tag,
a specifying unit configured to specify a position of the tag by using the positional information collected by the collecting unit, and
an output unit configured to output information related to the position of the tag that has been specified by the specifying unit.

4. The position search system according to claim 2 or 3, wherein, even when the presence of the second communication terminal has been sensed, the setting unit switches the signal sent by the tag from the first signal to the second signal when the second communication terminal is an identical communication terminal for a predetermined period of time or more.

5. The position search system according to any one of claims 1 to 4, wherein, when a movement of the tag made by an amount equal to or greater than a predetermined distance has been determined in the state in which the pair with the first communication terminal is canceled or in the state in which the presence of the first communication terminal is not sensed, the setting unit sets the signal to be sent by the tag to the second signal.

6. The position search system according to any one of claims 1 to 5, wherein, when the tag is located at a place where the tag stayed for a certain period of time or more in the past, the setting unit sets the signal to be sent by the tag to the first signal instead of the second signal.

7. The position search system according to any one of claims 1 to 6, wherein the setting unit sets, as the signal to be sent by the tag, the second signal in which at least one of the transmission output and the transmission frequency is increased in accordance with a movement distance of the tag.

8. A position search method performed by a position search system including a tag that sends a signal that includes identification information, a plurality of communication terminals each of which receives the signal that is sent by the tag, and a server that collects information from the communication terminals each of which has received the signal sent by the tag, the position search method comprising:
a determining step of determining, performed by the tag, whether or not a movement has been made by the tag;
a setting step of
setting, performed by the tag, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, and
setting, performed by the tag, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed;
a sending step of sending, performed by the tag, the signal that has been set at the setting step;
a receiving step of receiving, performed by the communication terminal, the signal that has been sent from the tag;
a notifying step of notifying, performed by the communication terminal, the server of identification information on the tag included in the signal received from the tag, and positional information on the own communication terminal at the time of reception of the signal;
a collecting step of collecting, performed by the server from the plurality of communication terminals, identification information on the tag and the positional information on the tag;
a specifying step of specifying, performed by the server, a position of the tag by using the positional information collected at the collecting step; and
an outputting step of outputting, performed by the server, information related to the position of the tag that has been specified at the specifying step.

9. A position search method performed by a position search system including a tag that sends a signal that includes identification information, a plurality of communication terminals each of which receives the signal that is sent by the tag, and a server that collects information from the communication terminals each of which has received the signal sent by the tag, the position search method comprising:
a determining step of determining, performed by the tag, whether or not a movement has been made by the tag;
a setting step of
setting, performed by the tag, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, and
setting, performed by the tag, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed and when presence of a second communication terminal with which the tag is able to communicate is not sensed;
a sending step of sending, performed by the tag, the signal that has been set at the setting step;
a receiving step of receiving, performed by the communication terminal, the signal that has been sent from the tag;
a notifying step of notifying, performed by the communication terminal, the server of identification information on the tag included in the signal received from the tag, and positional information on the own communication terminal at the time of reception of the signal;
a collecting step of collecting, performed by the server from the plurality of communication terminals, identification information on the tag and the positional information on the tag;
a specifying step of specifying, performed by the server, a position of the tag by using the positional information collected at the collecting step; and
an outputting step of outputting, performed by the server, information related to the position of the tag that has been specified at the specifying step.

10. A position search method performed by a position search system including a tag that sends a signal that includes identification information, a plurality of communication terminals each of which receives the signal that is sent by the tag, and a server that collects information from the communication terminals each of which has received the signal sent by the tag, the position search method comprising:
a determining step of determining, performed by the tag, whether or not a movement has been made by the tag;
a setting step of
setting, performed by the tag, as the signal to be sent by the tag, a first signal when presence of a first communication terminal that has been paired with the tag from among the plurality of communication terminals is being sensed, or, after a pair with the first communication terminal has been canceled or after the presence of the first communication terminal is no longer sensed, and
setting, performed by the tag, as the signal to be sent by the tag, a second signal, in which at least one of a transmission output and a transmission frequency has been increased as compared to the first signal, when the movement of the tag has been determined in a state in which the pair with the first communication terminal is canceled or in a state in which the presence of the first communication terminal is not sensed, or, when the movement of the tag has been determined and also when presence of a second communication terminal with which the tag is able to communicate is not sensed for a certain period of time or more;
a sending step of sending, performed by the tag, the signal that has been set at the setting step;
a receiving step of receiving, performed by the communication terminal, the signal that has been sent from the tag;
a notifying step of notifying, performed by the communication terminal, the server of identification information on the tag included in the signal received from the tag, and positional information on the own communication terminal at the time of reception of the signal;
a collecting step of collecting, performed by the server from the plurality of communication terminals, identification information on the tag and the positional information on the tag;
a specifying step of specifying, performed by the server, a position of the tag by using the positional information collected at the collecting step; and
an outputting step of outputting information related to the position of the tag that has been specified at the specifying step.
